# EUROPEAN PATENT APPLICATION

(11) **EP 4 797 042 A1**
(43) Date of publication of application: **26.08.2026**
(21) Application number: 26158765.3
(22) Date of filing: 16.02.2026
(51) Int. Cl.: G06F 1/16, G06F 3/02, G06F 3/0488, H04M 1/02, H04M 1/23, G06V 40/13

(54) **INTERACTION METHOD AND MOBILE TERMINAL**

(30) Priority: 20.02.2025 CN 202510191713
(71) Applicant: Nothing Technology Limited, London WC1N 2BF (GB)
(72) Inventor: XIA, Dong, Shenzhen, 518035 (CN); YAN, Weiwei, Shenzhen, 518035 (CN); GU, Jiangbo, Shenzhen, 518035 (CN)
(74) Representative: EIP

(57) **Abstract**

The disclosure discloses an interaction method and a mobile terminal. The interaction method is applicable to a first mobile terminal. The first mobile terminal includes a control region, a body, a first display component disposed on a first surface of the body, and a second display component disposed on a second surface of the body. The second display component is formed by light-emitting units arranged in an array. The interaction method includes the following. An input signal from the control region is received, where the input signal is obtained via the control region in response to an external operation. Display parameters for the light-emitting units on the second display component are determined based on the input signal, and first display content is displayed on the second display component. By implementing the disclosure, adaptability of the mobile terminal in different environments and user convenience are improved.

## Description

### TECHNICAL FIELD

This disclosure relates to the field of mobile phone technology. In particular, this disclosure relates to an interaction method and a mobile terminal.

### BACKGROUND

With the development of mobile terminals, related mobile phone products are no longer limited to previous main functions (e.g., communication, internet access, etc.). Based on their main functions, more emphasis is placed on user convenience and adaptability in different environments. For example, when a user is in a crowded and noisy environment, if the user needs to view information such as weather, photo, etc., the user needs to first unlock a display screen (referred to as "first display component") of a mobile phone, and then tap on related applications on the first display component to view the information. However, in the crowded and noisy environment, it is inconvenient for the user to operate. Therefore, there is a need to provide an interaction method and a mobile terminal, to improve the adaptability of the mobile terminal in different environments and the user convenience.

### SUMMARY

To address at least one or more of the technical problems mentioned above, the disclosure provides an interaction method and a mobile terminal in several aspects.

In a first aspect, the disclosure provides an interaction method. The method is applicable to a first mobile terminal. The first mobile terminal includes a control region, a body, a first display component disposed on a first surface of the body, and a second display component disposed on a second surface of the body. The second display component is formed by light-emitting units arranged in an array. The method includes the following. An input signal from the control region is received, where the input signal is obtained via the control region in response to an external operation. Display parameters for the light-emitting units on the second display component are determined based on the input signal, and first display content is displayed on the second display component.

In some embodiments, the first mobile terminal further includes a sensor component, and the method further includes the following. The first display content displayed on the second display component is switched in response to a trigger signal from the sensor component.

In some embodiments, the first display content is a target image, and before the first display content is displayed on the second display component, the method further includes the following. Array segmentation is performed on the target image, where each light-emitting unit is mapped to at least one segmented region of the target image. A display parameter for the light-emitting unit mapped to each segmented region is determined, to obtain a dot-matrix form of the target image. The second display component is controlled to display the dot-matrix form of the target image.

In some embodiments, the first mobile terminal further includes a camera module, and the method further includes the following. The camera module is controlled to capture a first preview image, and the captured first preview image is processed into a second preview image, where the second preview image is a dot-matrix form of the first preview image. The second display component is controlled to display the second preview image.

In some embodiments, the method further includes the following. A display component facing a face is detected. Content display is performed on the first display component based on a detection that the display component facing the face is the first display component. Content display is performed on the second display component based on a detection that the display component facing the face is the second display component. Second display content displayed on the first display component is switched to display on the second display component based on a detection that the display component facing the face is switched from the first display component to the second display component. The first display content displayed on the second display component is switched to display on the first display component based on a detection that the display component facing the face is switched from the second display component to the first display component.

In some embodiments, the first display component is provided with a widget, and third display content displayed on the widget is associated with the first display content displayed on the second display component.

In some embodiments, the second display component is disposed in a first region of the second surface of the body. The widget is disposed on the first display component at a position corresponding to the first region. The third display content is a first animation effect, the first display content is a second animation effect, and the first animation effect and the second animation effect are associated with each other in timing.

In some embodiments, the first display component is further provided with a display entry corresponding to the second display component. The second display component is controlled to display the third display content in response to an operation instruction associating the widget with the display entry.

In some embodiments, the sensor component is a pressure sensor component, and the pressure sensor component is disposed on the second surface of the body. The first display content displayed on the second display component is switched in response to the trigger signal from the sensor component as follows. A pressure-sensing signal from the pressure sensor component is received, and the first display content displayed on the second display component is switched according to the pressure-sensing signal. Alternatively, the sensor component is a gyro-sensor, and the gyro-sensor is disposed inside the body. The method further includes the following. A first activation signal from the control region is received, and the gyro-sensor is activated according to the first activation signal. The first display content displayed on the second display component is switched in response to the trigger signal from the sensor component as follows. A rotation signal from the gyro-sensor is received, and the first display content displayed on the second display component is switched according to the rotation signal, where the rotation signal is obtained via the gyro-sensor by sensing a rotational motion of the first mobile terminal. Alternatively, the sensor component is a touch sensor component, and the touch sensor component is disposed on the second surface of the body. The first display content displayed on the second display component is switched in response to the trigger signal from the sensor component as follows. A touch signal from the touch sensor component is received, and the first display content displayed on the second display component is switched according to the touch signal.

In some embodiments, the sensor component further includes a capacitive component, and the capacitive component and the pressure sensor component are integrated in the control region. When a pressure-sensing signal from the pressure sensor component is received and a capacitive signal from the capacitive component is received, it is determined that a trigger signal from the sensor component is obtained.

In some embodiments, the first mobile terminal is connected to a second mobile terminal, and the method further includes the following. Operational information of the second mobile terminal is obtained, where the operational information includes at least one of: an operational state of the second mobile terminal, operational content displayed on the second mobile terminal, or an operational interface of the second mobile terminal. The second display component is controlled to at least partially display the operational information of the second mobile terminal.

In some embodiments, the method further includes the following. The operational state of the second mobile terminal connected to the first mobile terminal is controlled via the control region.

In some embodiments, the first mobile terminal further includes a prompt component. A second activation signal from the control region is received, and the prompt component is activated according to the second activation signal. The prompt component is controlled to perform information prompt.

In some embodiments, the control region further integrates a fingerprint recognition module, and the method further includes the following. Target fingerprint information collected via the control region is obtained. The first display component is unlocked for content display when the target fingerprint information matches preset fingerprint information.

In a second aspect, the disclosure provides a mobile terminal configured to execute the method in the first aspect or in any embodiment of the first aspect. The mobile terminal is the first mobile terminal, and the first mobile terminal includes the control region, the body, the first display component disposed on the body, and the second display component disposed on the body. The first display component is disposed on the first surface of the body, and the second display component is disposed on the second surface of the body. The second display component is formed by the light-emitting units arranged in the array, and the second display component is controlled for content display by controlling the display parameters for the light-emitting units. The control region is disposed on the second surface of the body, and the control region is configured to receive an external input signal, to display the first display content on the second display component.

In some embodiments, the first mobile terminal further includes a transparent cover plate. The transparent cover plate is configured to cover the second surface. The second display component is located under the transparent cover plate.

In some embodiments, the control region integrates a capacitive component and a pressure sensor component. When both the capacitive component and the pressure sensor component are triggered, it is determined that the external input signal is received by the control region.

In some embodiments, the pressure sensor component is implemented as at least two pressure sensor components, and a switching direction of the first display content displayed on the second display component is determined in response to an order in which the at least two pressure sensor components are triggered.

In some embodiments, the pressure sensor component includes a pressure-sensitive sensor and a spring-loaded plate. The pressure-sensitive sensor is disposed on the spring-loaded plate. One end of the spring-loaded plate is fixed to a bracket, and the other end of the spring-loaded plate abuts against a first surface of the capacitive component. A second surface of the capacitive component adheres to a transparent cover plate.

In some embodiments, the body includes a frame, and the control region is disposed near the frame in the middle of the second surface of the body.

In some embodiments, a gap is defined between the light-emitting units arranged in the array, a photovoltaic component is disposed in the gap, and the photovoltaic component is configured to power the second display component.

According to the interaction method and the mobile terminal provided above, in embodiments of the disclosure, the second display component and the control region are newly added to the first mobile terminal that is configured to execute the interaction method, and thus the second display component is controlled via the control region for display content. As such, when it is inconvenient or undesirable for a user to view information via the first display component, the user can also view the information via the newly added second display component, thereby improving adaptability of the mobile terminal in different environments and user convenience. Further, through interaction with the second display component, interaction between the user and the mobile terminal is also further increased, thereby reducing the frequency of use of the first display component by the user.

### BRIEF DESCRIPTION OF THE DRAWINGS

By reading the detailed description below with reference to the accompanying drawings, the above and other purposes, features, and advantages of the exemplary embodiments of the disclosure will become easy to understand. In the accompanying drawings, several embodiments of the disclosure are illustrated in an exemplary and non-restrictive manner, and the same or corresponding reference signs represent the same or corresponding parts.
FIG. 1 illustrates an exemplary flowchart of an interaction method according to some embodiments of the disclosure.
FIG. 2 illustrates a schematic diagram of a first mobile terminal according to some embodiments of the disclosure.
FIG. 3 illustrates a front schematic diagram and a rear schematic diagram of a first mobile terminal according to some embodiments of the disclosure.
FIG. 4A illustrates a specific exemplary diagram of a second display component according to some embodiments of the disclosure.
FIG. 4B illustrates a specific exemplary diagram of a first preview image and a second preview image according to some embodiments of the disclosure.
FIG. 4C illustrates another specific exemplary diagram of a first preview image and a second preview image according to some embodiments of the disclosure.
FIG. 5 illustrates a schematic diagram of a widget according to some embodiments of the disclosure.
FIG. 6 illustrates a specific exemplary diagram of a Snake game interface according to some embodiments of the disclosure.
FIG. 7 illustrates a rear schematic diagram of a first mobile terminal including a first region and a front schematic diagram of the first mobile terminal including a widget according to some embodiments of the disclosure.
FIG. 8 illustrates a rear schematic diagram of a first mobile terminal including a first region and a front schematic diagram of the first mobile terminal including a widget and a display entry according to some embodiments of the disclosure.
FIG. 9 illustrates a rear schematic diagram of a first mobile terminal including a vibration motor according to some embodiments of the disclosure.
FIG. 10 illustrates a rear schematic diagram of a first mobile terminal including a light strip according to some embodiments of the disclosure.
FIG. 11 illustrates a schematic diagram of a control region that integrates a capacitive component and a pressure sensor component according to some embodiments of the disclosure.
FIG. 12 illustrates a schematic diagram of a deployment manner of a capacitive component and a pressure sensor component according to some embodiments of the disclosure.

Descriptions of reference signs of the accompanying drawings: first mobile terminal 200, first display component 210, second display component 220, control region 230, camera module 240, first region 250, widget 260, and display entry 270.

### DETAILED DESCRIPTION

The following will clearly and completely describe technical solutions of embodiments of the disclosure with reference to the accompanying drawings in embodiments of the disclosure. Apparently, the embodiments described herein are merely some embodiments, rather than all embodiments, of the disclosure. Based on embodiments of the disclosure, all other embodiments obtained by those of ordinary skill in the art without creative effort shall fall within the protection scope of the disclosure.

It may be understood that, the terms "include", "comprise" , and "contain" used in the specification and claims of the disclosure indicate the existence of the described features, integers, steps, operations, elements, and/or components, but do not exclude the existence or addition of one or more other features, integers, steps, operations, elements, components, and/or sets thereof.

It may also be understood that, the terms used in the specification of the disclosure are only for the purpose of describing specific embodiments and are not intended to limit the disclosure. As used in the specification and claims of the disclosure, the singular forms "a/an", "one", and "the" are intended to include the plural forms unless the context clearly indicates otherwise. It may also be further understood that, the term "and/or" used in the specification and claims of the disclosure refers to any combination and all possible combinations of one or more of the associated listed items, and includes these combinations.

As used in the specification and claims of the disclosure, the term "if" may be interpreted as "when ..." or "once" or "in response to determining" or "in response to detecting" depending on the context. Similarly, the phrase "if it is determined" or "if [the described condition or event] is detected" may be interpreted as "once it is determined" or "in response to determining" or "once [the described condition or event] is detected" or "in response to detecting [the described condition or event]" depending on the context.

Specific embodiments of the disclosure are described in detail below in conjunction with the accompanying drawings.

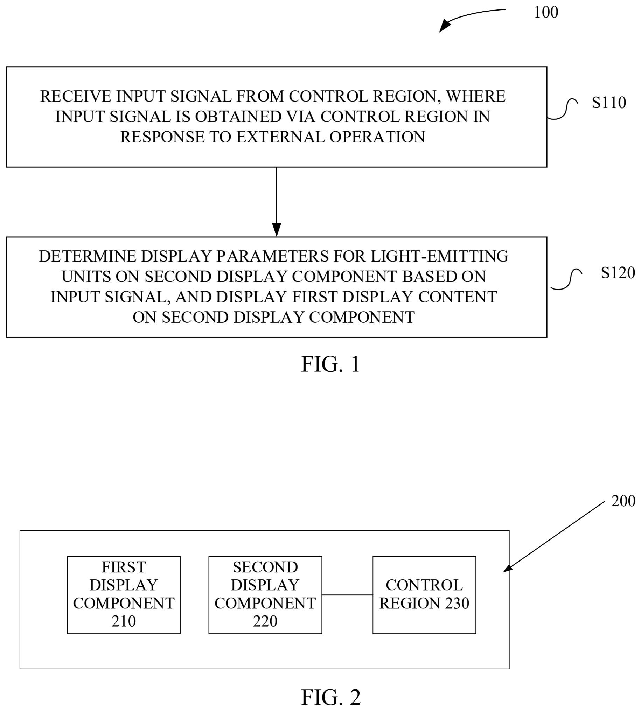

Reference can be made to FIG. 1, where FIG. 1 is an exemplary flowchart of an interaction method 100 according to embodiments of the disclosure. As illustrated in FIG. 1, the interaction method 100 is applicable to a first mobile terminal 200. The interaction method 100 includes the following. At S110, an input signal from a control region 230 is received, where the input signal is obtained via the control region 230 in response to an external operation. At S120, display parameters for light-emitting units on a second display component 220 are determined based on the input signal, and first display content is displayed on the second display component 220.

Exemplarily, in embodiments of the disclosure, as illustrated in FIG. 2, the first mobile terminal 200 includes a body (not illustrated in FIG. 2), a first display component 210 disposed on a first surface of the body, the second display component 220 disposed on a second surface of the body, and the control region 230.

In embodiments of the disclosure, the first display component 210 can be located on the first surface (a front surface) of the body of the first mobile terminal 200 and completely or partially cover the first surface. A display technology used by the first display component 210 may be liquid crystal display (LCD), organic light-emitting diode (OLED), active matrix organic light-emitting diode (AMOLED), etc., which is not specifically limited in embodiments of the disclosure.

In embodiments of the disclosure, a display area of the second display component 220 (i.e., a secondary screen of the first mobile terminal 200) is smaller than a display area of the first display component 210. The second display component 220 can be located at any position on the second surface (e.g., a back surface) of the body of the first mobile terminal 200. Embodiments of the disclosure are illustrated with an example that the second surface is the back surface of the body of the first mobile terminal 200. A display technology used by the second display component 220 may be LCD, OLED, or AMOLED. Certainly, to achieve differentiation from the first display component 210 and present a unique display effect, the display technology used by the second display component 220 may also be mini light-emitting diode (mini LED). The display technology used by the second display component 220 is not specifically limited in embodiments of the disclosure.

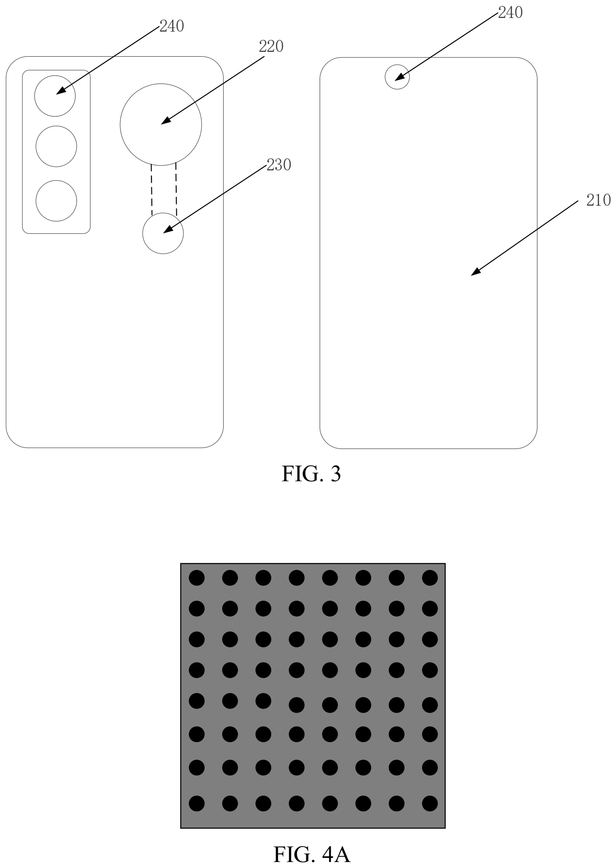

FIG. 3 illustrates a front schematic diagram and a rear schematic diagram of the first mobile terminal 200 according to some embodiments of the disclosure. As illustrated in FIG. 3, the second display component 220 is disposed in an upper-right region of the back surface (i.e., the second surface) of the first mobile terminal 200. The first display component 210 is disposed on the front surface (i.e., the first surface) of the first mobile terminal 200 and partially covers the front surface of the first mobile terminal 200.

Embodiments of the disclosure are illustrated with an example that the display technology used by the second display component 220 is mini LED. In this case, the second display component 220 may be formed by light-emitting units arranged in an array, for example, a 100* 100 square array or a circular array including 5000 light-emitting units. The number of light-emitting units and the shape of the array are not specifically limited in embodiments of the disclosure.

FIG. 4A illustrates a specific exemplary diagram of the second display component 220. As illustrated in FIG. 4A, the second display component 220 in FIG. 4A is formed by light-emitting units in an 8*8 square array, where the black circles represent the light-emitting units. It can be noted that, for ease of illustration, the 8*8 square array in FIG. 4A is merely an example and is not intended to limit the disclosure.

Exemplarily, in embodiments of the disclosure, the control region 230 is connected to the second display component 220. The control region 230 may be a touch screen, a physical key, or a pressure-sensing key, etc. The control region 230 may be disposed at any position on the first surface of the body of the first mobile terminal 200. Certainly, for easier control of the second display component 220, the control region 230 may also be disposed at any position on the second surface of the body of the first mobile terminal 200. Embodiments of the disclosure do not specifically limit the control region 230 and the position of the control region 230. Embodiments of the disclosure are illustrated with an example that the control region 230 is disposed on the second surface of the body of the first mobile terminal 200.

It can be noted that, the first mobile terminal 200 in embodiments of the disclosure, in addition to the components mentioned above, further includes a control chip (not illustrated in the figure), where the control chip can be integrated in the body of the first mobile terminal 200. In embodiments of the disclosure, the control chip may be implemented as one control chip or multiple control chips, which is not specifically limited in embodiments of the disclosure.

When the control chip is implemented as one control chip, the control chip can be a system on chip (SOC), and the control chip is configured to control all components inside the first mobile terminal 200. When the control chip is implemented as multiple control chips, the multiple control chips can specifically include one first control chip (referred to as "main control chip") and at least one second control chip (referred to as "auxiliary control chip"), where computing performance of the first control chip is greater than computing performance of the second control chip. Each second control chip can be configured to control at least one component of the first mobile terminal 200. Specifically, the main control chip can be an SOC, and the auxiliary control chip can be a microcontroller unit (MCU).

Exemplarily, in embodiments of the disclosure, the input signal is obtained via the control region 230 in response to the external operation. There may be many types of external operations, such as a single-tap operation, a double-tap operation, a press operation with different pressures, etc. In embodiments of the disclosure, an input signal corresponding to each type of external operation can correspond to one display content on the second display component 220, and different content can be displayed on the second display component 220 through different received input signals. For example, an input signal corresponding to a single-tap operation corresponds to display of an image on the second display component 220, and an input signal corresponding to a double-tap operation corresponds to display of a date on the second display component 220.

Certainly, there may be only one type of external operation, such as a single-tap operation. In this case, the content displayed on the second display component 220 may be sorted, and the content is displayed according to the sorted result each time the control region 230 is tapped. For example, the sorted result of the content displayed on the second display component 120 is: image, battery level of the mobile terminal, date, and clock. When the control region 230 is tapped in sequence, the control region 230 displays the image, then the battery level of the mobile terminal, then the date, then the clock, then the image again, then the battery level of the mobile terminal... cycling through the content in sequence.

Exemplarily, in embodiments of the disclosure, a display parameter may include an on/off state of a light-emitting unit, brightness of a light-emitting unit, a color of a light-emitting unit, etc. Embodiments of the disclosure do not specifically limit the display parameter. The first display content may be of various types, for example, image, time, battery level, game interface, weather, etc. Embodiments of the disclosure do not specifically limit the first display content.

In embodiments of the disclosure, the first display content to be displayed on the second display component 220 can be determined based on the input signal. For the first display content, the display parameters for the light-emitting units on the second display component 220 can be determined, such that a dot-matrix form of the first display content is obtained and then displayed on the second display component 220.

There are many methods for determining the display parameters for the light-emitting units. For example, a display parameter for each light-emitting unit on the second display component 220 can be determined. For another example, a preset number of adjacent light-emitting units (e.g., four adjacent light-emitting units) on the second display component 220 can be taken as a group of light-emitting units, and a display parameter for each group of light-emitting units can be determined. The disclosure does not specifically limit in this regard.

As a specific example, assuming that the second display component 220 has 100 light-emitting units and the specified content has 10000 pixels, a region enclosed by 100 pixels (10*10) corresponds to one light-emitting unit.

Based on this, when determining the brightness among the display parameters for the light-emitting units, the average brightness of 100 pixels, the median brightness of 100 pixels, or the average brightness of 100 pixels after removing extreme brightness values may be used as the brightness of the light-emitting unit. In embodiments of the disclosure, for example, the average brightness of 100 pixels is taken as the brightness of the corresponding light-emitting unit. If the brightness of 100 pixels is all 100, the brightness of the corresponding light-emitting unit is also 100. If the brightness of 100 pixels is all 1, the brightness of the corresponding light-emitting unit is also 1. If the brightness of 100 pixels is 1 to 100 in sequence, the brightness of the corresponding light-emitting unit is 50.

In embodiments of the disclosure, after determining the brightness of the light-emitting units, whether the mapped specified content meets an expectation is analyzed. For example, whether there is distortion is analyzed. If the distortion exists, secondary adjustment may be performed. There are many specific adjustment methods, such as adjustment by a trained AI model to enhance the display effect.

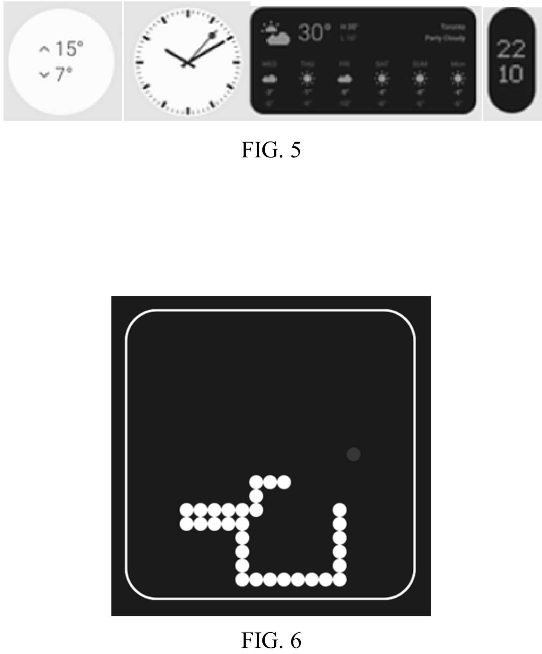

When determining the color among the display parameters for the light-emitting units, grayscale processing can be performed on the specified content, and all content, such as a clock widget, a weather widget, a date widget, etc., in FIG. 5, can be characterized by different grayscales.

As for a manner in which the display parameters for the light-emitting units on the second display component 220 are determined for the first display content, reference can be made to specific descriptions in the following embodiments, which will not be repeated herein.

In embodiments of the disclosure, the second display component 220 and the control region 230 are newly added to the first mobile terminal 200 that is configured to execute the interaction method 100, and thus the second display component 220 is controlled via the control region 230 for display content. As such, when it is inconvenient or undesirable for the user to view information via the first display component 210, the user can also view the information via the newly added second display component 220, thereby improving adaptability of the mobile terminal in different environments and user convenience. Further, through interaction with the second display component 220, interaction between the user and the mobile terminal is also further increased, thereby reducing the frequency of use of the first display component 210 by the user.

In an optional embodiment of the disclosure, the first mobile terminal 200 further includes a sensor component. The interaction method 100 further includes the following. The first display content displayed on the second display component 220 is switched in response to a trigger signal from the sensor component.

Exemplarily, in embodiments of the disclosure, the sensor component may include a gyro-sensor, a capacitive component, a pressure sensor component, a light detection and ranging (LiDAR), a distance sensor component, a sensor component for detecting human proximity (SAR sensor component), an infrared sensor component, a touch sensor component, etc., which is not specifically limited in embodiments of the disclosure.

In an embodiment of the disclosure, when the sensor component is a pressure sensor component, the pressure sensor component is disposed on the second surface of the body. The first display content displayed on the second display component is switched in response to the trigger signal from the sensor component as follows. A pressure-sensing signal from the pressure sensor component is received, and the first display content displayed on the second display component is switched according to the pressure-sensing signal.

Exemplarily, during specific implementation, the pressure sensor component can be disposed at any position on the second surface of the body. As a specific example, the pressure sensor component is integrated in the control region 230. When the control region 230 is pressed by a finger of a user, the pressure sensor component generates a pressure-sensing signal (i.e., the trigger signal) and sends the pressure-sensing signal to a control chip of the first mobile terminal 200, and the control chip switches the first display content displayed on the second display component 220 according to the received pressure-sensing signal. For example, the first display content currently displayed on the second display component 220 is date, and when the trigger signal from the sensor component is received, the first display content displayed on the second display component 220 is switched from date to weather.

When the sensor component is a capacitive component and a pressure sensor component, the capacitive component and the pressure sensor component can be integrated in the control region 230. When the control region 230 is pressed by the finger of the user, the capacitive component generates a capacitive signal, and the pressure sensor component generates a pressure-sensing signal. When both the capacitive signal and the pressure-sensing signal are triggered, the trigger signal from the sensor component is obtained, and the first display content displayed on the second display component 220 is switched. For example, the first display content currently displayed on the second display component 220 is date, and when the trigger signal from the sensor component is received, the first display content displayed on the second display component 220 is switched from date to weather.

In an embodiment of the disclosure, when the sensor component is a gyro-sensor, the gyro-sensor is disposed inside the body of the first mobile terminal 200. The interaction method 100 further includes the following. A first activation signal from the control region is received, and the gyro-sensor is activated according to the first activation signal. The first display content displayed on the second display component is switched in response to the trigger signal from the sensor component as follows. A rotation signal from the gyro-sensor is received, where the rotation signal is obtained via the gyro-sensor by sensing a rotational motion of the first mobile terminal 200. The first display content displayed on the second display component 220 is switched according to the rotation signal.

Exemplarily, during specific implementation, when the control region 230 is pressed by the finger of the user, the first activation signal is generated, and the first activation signal is used for activating the gyro-sensor. After the gyro-sensor is activated, the user can rotate the first mobile terminal 200. At this time, the gyro-sensor can sense the rotational motion of the first mobile terminal 200, and thus obtain a rotation signal (i.e., the trigger signal from the sensor component). Then, the gyro-sensor sends the rotation signal to the control chip of the first mobile terminal 200, and the control chip switches the first display content displayed on the second display component 220 according to the received rotation signal. For example, the first display content currently displayed on the second display component 220 is a game interface (e.g., the Snake), and a movement direction of the Snake on the second display component 220 can be changed according to the rotation signal.

For a Snake game interface, FIG. 6 illustrates a specific example of the Snake game interface according to some embodiments of the disclosure. As illustrated in FIG. 6, pixels of the game interface are in one-to-one correspondence with light-emitting units of the second display component 220. A moving snake (i.e., the line composed of white dots in FIG. 6) continuously moves forward, avoiding its own body and obstacles (not illustrated in FIG. 6) to eat food (i.e., the gray dot in FIG. 6) on the interface. Each time the snake eats a piece of food, the snake increases by one segment (e.g., one white dot).

In an embodiment of the disclosure, when the sensor component is a touch sensor component, the touch sensor component is disposed on the second surface of the body. The first display content displayed on the second display component is switched in response to the trigger signal from the sensor component as follows. In response to a touch signal from the touch sensor component, the first display content displayed on the second display component is switched according to the touch signal.

Exemplarily, during specific implementation, the touch sensor component can be disposed at any position on the second surface of the body, for example, integrated in the control region 230. When operations such as single-tap, double-tap, sliding, zooming, etc., are performed, with the finger of the user, on the control region 230, the touch sensor component can recognize different gestures by analyzing the position and movement of the finger, convert the different gestures into corresponding operation instructions (i.e., the touch signal), and send the touch signal to the control chip of the first mobile terminal 200. The control chip switches the first display content displayed on the second display component 220 according to the touch signal.

In embodiments of the disclosure, the first display content displayed on the second display component 220 is switched according to the sensed trigger signal from the sensor component, thereby realizing switching of the display content on the second display component 220, and further improving interactivity between the user and the first mobile terminal 200.

In an optional embodiment of the disclosure, the first display content is a target image, and before the first display content is displayed on the second display component, the interaction method 100 further includes the following. Array segmentation is performed on the target image, where each light-emitting unit is mapped to at least one segmented region of the target image. A display parameter for the light-emitting unit mapped to each segmented region is determined, to obtain a dot-matrix form of the target image. The second display component 220 is controlled to display the dot-matrix form of the target image.

Exemplarily, in embodiments of the disclosure, before the target image is displayed on the second display component 220, the target image needs to be segmented, and the segmented target image is mapped to the light-emitting units of the second display component 220. There are many specific segmentation methods. For example, the target image may be segmented according to the number of light-emitting units. For another example, the target image may be segmented into a preset number (e.g., 3000) of segmented regions. Embodiments of the disclosure do not specifically limit the segmentation method for the target image.

After the segmentation of the target image is completed, the segmented regions are mapped to the light-emitting units, and each light-emitting unit is mapped to at least one segmented region of the target image. For each segmented region, a display parameter for the light-emitting unit mapped to each segmented region is determined according to pixels of the segmented region. After the display parameter for the light-emitting unit mapped to each segmented region is determined, the dot-matrix form of the target image is obtained, and then the control chip controls the second display component 220 to display the dot-matrix form of the target image.

In an optional embodiment of the disclosure, as illustrated in FIG. 3 again, the first mobile terminal 200 further includes a camera module 240. The interaction method 100 further includes the following. The camera module 240 is controlled to capture a first preview image, and the captured first preview image is processed into a second preview image, where the second preview image is a dot-matrix form of the first preview image. The second display component 220 is controlled to display the second preview image.

Exemplarily, in embodiments of the disclosure, as illustrated in a rear schematic diagram of the first mobile terminal 200 in FIG. 3, the camera module 240 may be disposed on the second surface of the body of the first mobile terminal 200, i.e., on the same side of the first mobile terminal 200 as the second display component 220. As illustrated in a front schematic diagram of the first mobile terminal 200 in FIG. 3, the camera module 240 may be disposed on the first surface of the body of the first mobile terminal 200. Embodiments of the disclosure do not specifically limit the disposing position of the camera module 240.

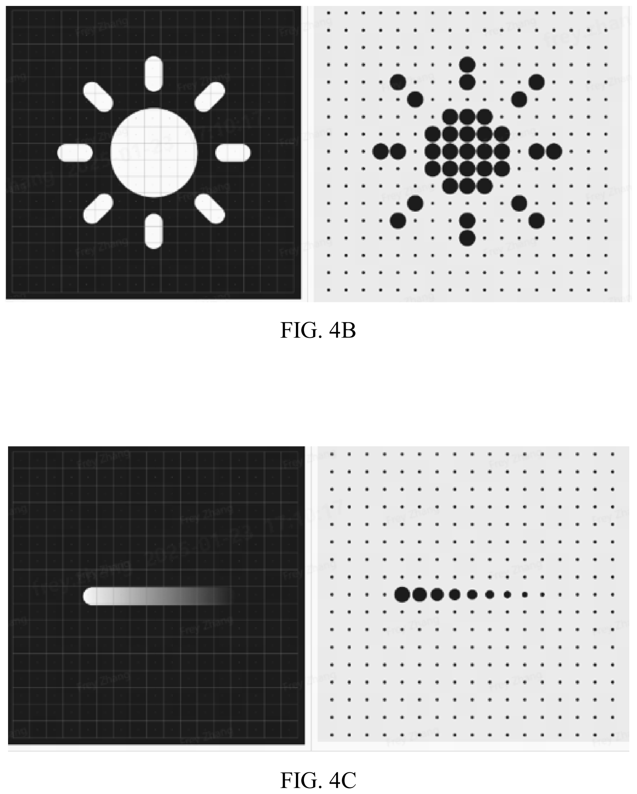

A process of processing the first preview image into the second preview image is described below with reference to FIG. 4B and FIG. 4C.

As illustrated in FIG. 4B, the left image in FIG. 4B is the first preview image, the right image in FIG. 4B is the second preview image, and the second display component 220 as illustrated in FIG. 4B is formed by light-emitting units arranged in a 17* 17 square array. For the first preview image in FIG. 4B, the first preview image is segmented according to the number of light-emitting units of the second display component 220, i.e., the first preview image is segmented into 17* 17 segmented regions, and each segmented region corresponds to one light-emitting unit. Then, the segmented regions are mapped onto the light-emitting units of the second display component 220. Specifically, for each segmented region, if a proportion of a foreground image in the segmented region is greater than or equal to a specified proportion (e.g., 50%), the segmented region is determined as a foreground segmented region. If the proportion of the foreground image in the segmented region is less than the specified proportion, the segmented region is determined as a background segmented region. During mapping, the size of the light-emitting unit mapped to the background segmented region remains unchanged, and the light-emitting unit mapped to the foreground segmented region becomes a larger circle, and thus the second preview image on the right of FIG. 4B is obtained. In this way, the first preview image is processed into the second preview image.

As illustrated in FIG. 4C, the left image in FIG. 4C is the first preview image, and the right image in FIG. 4C is the second preview image. The second display component 220 as illustrated in FIG. 4C is formed by light-emitting units arranged in a 17* 17 square array. For the first preview image in FIG. 4C, the first preview image is segmented according to the number of light-emitting units of the second display component 220, i.e., the first preview image is segmented into 17* 17 segmented regions, and each segmented region corresponds to one light-emitting unit. Then, the segmented regions are mapped to the light-emitting units of the second display component 220. Specifically, for each segmented region, if the proportion of the foreground image in the segmented region is greater than or equal to a specified proportion (e.g., 50%), the segmented region is determined as a foreground segmented region. If the proportion of the foreground image in the segmented region is less than the specified proportion, the segmented region is determined as a background segmented region. During mapping, the size of the light-emitting unit mapped to the background segmented region remains unchanged, and the light-emitting unit mapped to the foreground segmented region becomes a larger circle. In addition, a whiter color of the foreground segmented regions leads to a larger radius of the mapped circle, and thus the second preview image on the right side of FIG. 4C is obtained. In this way, the first preview image is processed into the second preview image.

Exemplarily, in embodiments of the disclosure, there are many trigger methods for controlling the camera module 240 to capture the first preview image. For example, the image capture is triggered when the control region 230 is pressed by the user. For another example, the image capture is triggered when an operation for image capture is performed by the user on the first display component 210 (i.e., the rear camera self-shooting mode of the first mobile terminal 200 is turned on), etc. Embodiments of the disclosure do not specifically limit the trigger method for controlling the camera module 240 to capture the first preview image.

Based on the above descriptions, the rear camera shooting function of the first mobile terminal 200 can be used for self-shooting while the user can see the preview.

In embodiments of the disclosure, by displaying the second preview image on the second display component 220, the first display component 210 may not display in this case, which can reduce the power consumption of the first mobile terminal 200.

In some embodiments of the disclosure, the interaction method 100 further includes the following. A display component facing a face is detected. Content display is performed on the first display component based on a detection that the display component facing the face is the first display component. Content display is performed on the second display component based on a detection that the display component facing the face is the second display component. Second display content displayed on the first display component is switched to display on the second display component based on a detection that the display component facing the face is switched from the first display component to the second display component. The first display content displayed on the second display component is switched to display on the first display component based on a detection that the display component facing the face is switched from the second display component to the first display component.

Exemplarily, in embodiments of the disclosure, the face may be a face of a human, or may be a face of an animal (e.g., a cat, a dog). Embodiments of the disclosure do not specifically limit the face.

In embodiments of the disclosure, the detection of the display component facing the face may be specifically performed by using one or more of a camera module 240, an LiDAR, an infrared sensor, a distance sensor, an SAR sensor, etc., that are deployed on the first mobile terminal 200. Embodiments of the disclosure do not specifically limit the method for detecting the display component facing the face.

Embodiments of the disclosure are illustrated with an example that the camera module 240 deployed on the mobile terminal is used for detection. The camera module 240 herein may be a camera module 240 deployed on the first surface of the body of the first mobile terminal 200, or may be a camera module 240 deployed on the second surface of the body of the first mobile terminal 200. Specifically, the camera module 240 deployed on the first surface of the body of the first mobile terminal 200 captures an image within a field of view (FOV) of the camera module 240. If a human face region is present in the image, it is determined that a display component facing the human face is the first display component 210. If no human face region is present in the image, it is determined that the display component facing the human face is the second display component 220.

In an optional embodiment of the disclosure, the first display component is provided with a widget 260, and third display content displayed on the widget 260 is associated with the first display content displayed on the second display component 220.

Exemplarily, in embodiments of the disclosure, a widget 260 is a lightweight application or component that typically has a single function and can be independently deployed and run. As illustrated in FIG. 5, the widget 260 may be, for example, a temperature widget, a clock widget, a date widget, a weather widget, etc.

In embodiments of the disclosure, the association between the third display content displayed on the widget 260 and the first display content displayed on the second display component 220 may include various situations. For example, the third display content displayed on the widget 260 is the same as the first display content displayed on the second display component 220, the third display content displayed on the widget 260 is opposite but continuous to the first display content displayed on the second display component 220 (e.g., the Snake emerges from the widget 260 and enters into the second display component 220), etc. Embodiments of the disclosure do not specifically limit the association between the third display content displayed on the widget 260 and the first display content displayed on the second display component 220.

In an optional embodiment of the disclosure, the second display component 220 is disposed in a first region 250 of the second surface of the body, and the widget 260 is disposed on the first display component 210 at a position corresponding to the first region 250. The third display content is a first animation effect, and the first display content is a second animation effect.

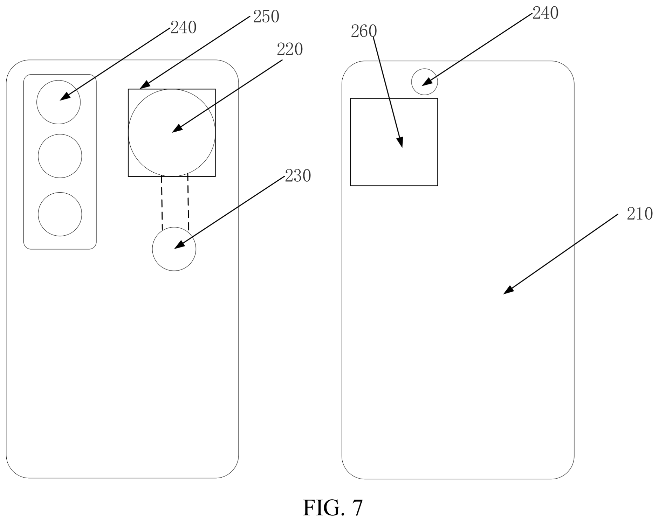

Exemplarily, as illustrated in FIG. 7, the second display component 220 is disposed in the first region 250 of the second surface of the body, and the widget 260 is disposed on the first display component 210 at the position corresponding to the first region 250. In embodiments of the disclosure, the first animation effect and the second animation effect are associated with each other in timing. Specifically, the Snake is taken as an example again. When the first animation effect is emerging, the second animation effect is entering; and when the first animation effect is entering, the second animation effect is emerging.

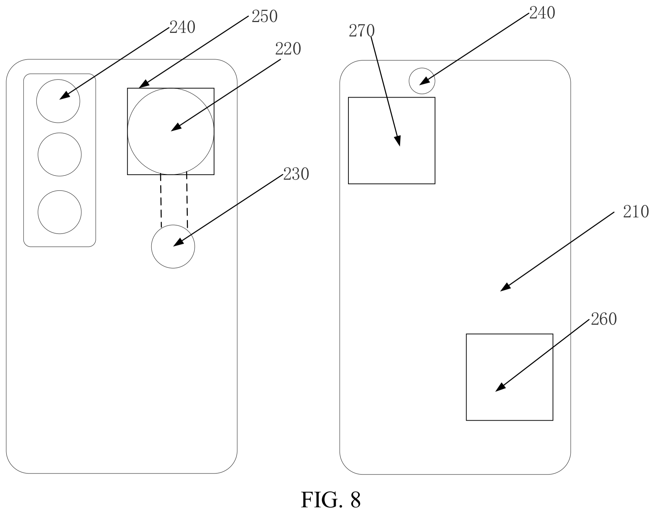

In an optional embodiment of the disclosure, as illustrated in FIG. 8, the first display component 210 is further provided with a display entry 270 corresponding to the second display component 220. The second display component 220 is controlled to display the third display content in response to an operation instruction associating the widget 260 with the display entry 270.

Exemplarily, in embodiments of the disclosure, the first display component 210 is further provided with the display entry 270 corresponding to the second display component 220, and the display entry 270 is disposed on the first display component 210 at the position corresponding to the first region 250. In response to the operation instruction associating the widget 260 with the display entry 270, i.e., the widget 260 is dragged to the display entry 270, the second display component 220 can be controlled to display the third display content.

In some embodiments, the first mobile terminal 200 is connected to a second mobile terminal. The interaction method 100 further includes the following. Operational information of the second mobile terminal is obtained, where the operational information includes at least one of: an operational state of the second mobile terminal, operational content displayed on the second mobile terminal, or an operational interface of the second mobile terminal. The second display component 220 is controlled to at least partially display the operational information of the second mobile terminal.

Exemplarily, in embodiments of the disclosure, the second mobile terminal and the first mobile terminal 200 may be connected via Bluetooth^{®}. The second mobile terminal may specifically be earphones, smart watch, etc. Embodiments of the disclosure do not specifically limit the second mobile terminal.

In embodiments of the disclosure, the operational information may include at least one of: the operational state of the second mobile terminal, the operational content displayed on the second mobile terminal, or the operational interface of the second mobile terminal. The operational state of the second mobile terminal may be, for example, a playback status of earphones. The operational content displayed on the second mobile terminal may include, for example, a battery level of the earphones, a battery level of a smart watch, etc. The operational interface of the second mobile terminal may be, for example, an interface displayed on the smart watch.

In embodiments of the disclosure, the control chip of the first mobile terminal 200 can actively obtain the operational information of the second mobile terminal at a preset time interval (e.g., every five minutes), or receive the operational information of the second mobile terminal sent by the second mobile terminal at a preset time interval (e.g., every five minutes). Embodiments of the disclosure do not specifically limit a manner of obtaining operational information of other terminals, which can be determined according to actual situations.

After the operational information of the second mobile terminal is obtained, the second display component 220 can be controlled to at least partially display the operational information of the second mobile terminal. Specifically, the operational information can be processed into a dot-matrix form of the operational information using the method described in the foregoing embodiment, and then displayed on the second display component 220.

In embodiments of the disclosure, after the operational information of the second mobile terminal is obtained, the obtained operational information may be directly displayed on the second display component 220, or may be adjusted based on the operational information before displayed on the second display component 220, which is not specifically limited in embodiments of the disclosure. In a specific embodiment, if the obtained operational information is the date: January 23, 2025, the content displayed on the second display component 220 may be changed to "January 23", or "Jan 23rd", or corresponding to lunar solar terms (e.g., Little New Year, Major Cold), etc.

In an optional embodiment of the disclosure, the interaction method 100 further includes the following. The operational state of the second mobile terminal connected to the first mobile terminal 200 is controlled via the control region 230, for example, controlling the pause, play, etc., of the earphones.

In this embodiment, the operational state of the second mobile terminal connected to the first mobile terminal 200 may be controlled via the control region 230 as follows. A control signal from the control region 230 is received, and the operational state of the second mobile terminal connected to the first mobile terminal 200 is controlled based on the control signal.

In some embodiments, the first mobile terminal 200 further includes a prompt component. A second activation signal from the control region 230 is received, and the prompt component is activated according to the second activation signal. The prompt component is controlled to perform information prompt.

Exemplarily, in embodiments of the disclosure, the prompt component may be at least one of a light strip, a vibration motor, a speaker, etc., capable of providing light, vibration, sound, and other prompts. Embodiments of the disclosure do not specifically limit the prompt component.

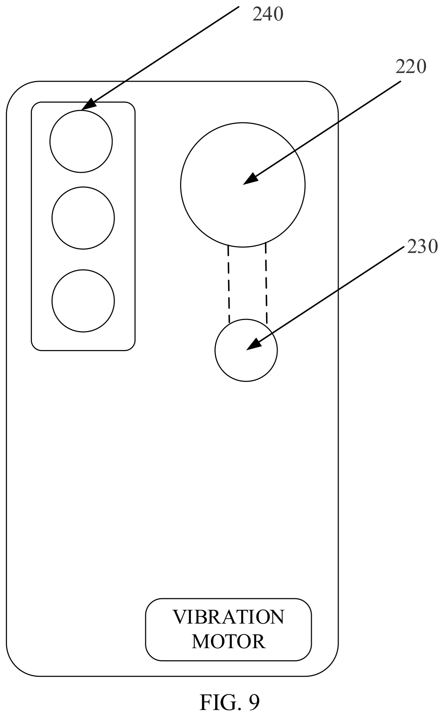

For example, the prompt component is a vibration motor. As illustrated in FIG. 9, the vibration motor may be disposed at any position on the second surface of the body of the first mobile terminal 200, for example, the lower-right corner, which is not specifically limited in embodiments of the disclosure.

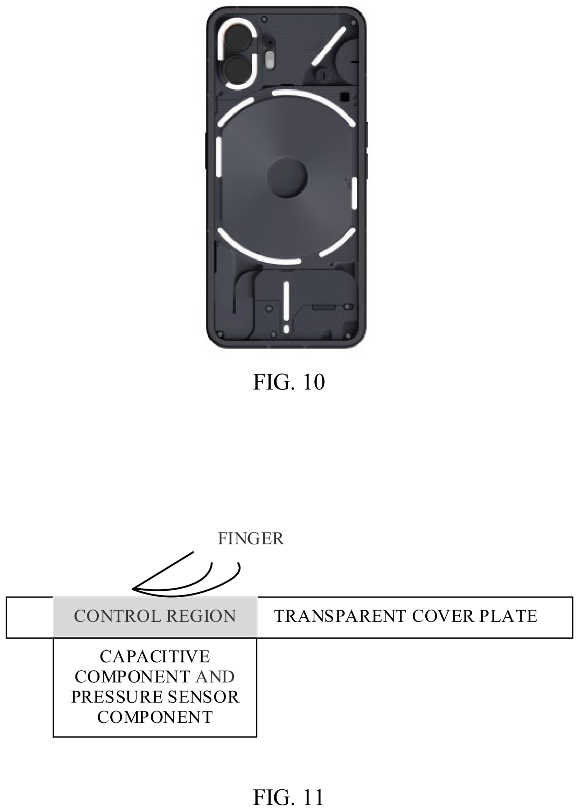

For example, the prompt component is a light strip, and the light strip is disposed on the second surface of the body of the first mobile terminal 200. As illustrated in FIG. 10, the white strips (including white straight strips and white curved strips) in FIG. 10 are the light strips. At least one light strip may be provided, and the at least one light strips are disposed at any position on the second surface of the body of the first mobile terminal 200 according to actual needs.

In embodiments of the disclosure, during a specific operation, the control region 230 receives external input information (referred to as "second activation signal') and sends the second activation signal to the control chip of the first mobile terminal 200. After the second activation signal from the control region 230 is received by the control chip, the control chip activates the prompt component according to the second activation signal. Then, the control region 230 receives external input information (referred to as "control signal") again and sends the control signal to the control chip. The control chip controls, based on the control signal, the prompt component to provide a corresponding prompt.

In an optional embodiment of the disclosure, the control region 230 further integrates a fingerprint recognition module. The interaction method 100 further includes the following. Target fingerprint information collected via the control region 230 is obtained. When the target fingerprint information matches preset fingerprint information, the first display component 210 is unlocked for content display.

Exemplarily, in embodiments of the disclosure, during specific implementation, when the control region 230 is covered by the finger of the user, the first mobile terminal 200 recognizes fingerprint information, i.e., the target fingerprint information. When the target fingerprint information matches the preset fingerprint information, the first display component 210 is unlocked for content display. The preset fingerprint information is pre-stored in the first mobile terminal 200, and there may be at least one piece of preset fingerprint information. When the target fingerprint information matches any one of the preset fingerprint information, the first display component 210 can be unlocked for content display.

It can be noted that, in embodiments of the disclosure, in addition to unlocking the first display component 210 through fingerprint, the second display component 220 can also be unlocked through fingerprint, i.e., the target fingerprint information collected via the control region 230 is obtained. When the target fingerprint information matches the preset fingerprint information, the second display component 220 is unlocked for content display. For the specific implementation, reference can be made to the description of unlocking the first display component 210, which is not repeated herein.

Based on the descriptions of the interaction method 100, a mobile terminal configured to execute the interaction method 100 is described below. The mobile terminal herein is the first mobile terminal 200 in the foregoing embodiment.

Referring to FIG. 2, FIG. 2 is a schematic diagram of the first mobile terminal 200 according to embodiments of the disclosure. As illustrated in FIG. 2, in embodiments of the disclosure, the first mobile terminal 200 includes the control region 230, the body, the first display component 210 disposed on the body, and the second display component 220 disposed on the body. The first display component 210 is disposed on the first surface of the body, and the second display component 220 is disposed on the second surface of the body. The second display component 220 is formed by the light-emitting units arranged in the array. The second display component 220 is controlled for content display by controlling the display parameters for the light-emitting units. The control region 230 is disposed on the second surface of the body, and is configured to receive an external input signal, to display the first display content on the second display component 220.

For the specific implementation, reference can be made to the description of the first mobile terminal 200 in the interaction method 100 in the foregoing embodiment, which is not repeated herein.

In an optional embodiment of the disclosure, the first mobile terminal 200 further includes a transparent cover plate. The transparent cover plate is configured to cover the second surface, and the second display component 220 is located under the transparent cover plate.

Exemplarily, in embodiments of the disclosure, based on the description of the transparent cover plate, when the control region 230 is located on the second surface of the body of the first mobile terminal 200, if the control region 230 is a touch screen, the control region 230 may be located under the transparent cover plate; if the control region 230 is a physical key, a hole may be defined in a region of the transparent cover plate corresponding to the control region 230 to facilitate user pressing; and if the control region 230 is a pressure-sensitive key, the control region 230 may be located under the transparent cover plate, or a hole may be defined in the region of the transparent cover plate corresponding to the control region 230 to facilitate user pressing.

In an optional embodiment of the disclosure, the control region 230 integrates a capacitive component and a pressure sensor component. When both the capacitive component and the pressure sensor component are triggered, it is determined that the external input signal is received by the control region 230.

Exemplarily, in embodiments of the disclosure, as illustrated in FIG. 11, the control region 230 integrates the capacitive component and the pressure sensor component. The capacitive component and the pressure sensor component are located under the transparent cover plate. When the control region 230 is pressed by the finger of the user, the capacitive component generates a capacitive signal, and at the same time, the pressure sensor component generates a pressure-sensing signal. When both signals are triggered, it is determined that the external input signal is received by the control region 230. In embodiments of the disclosure, two sensor components are integrated in the control region 230, such that it can be determined that the external input signal is received by the control region 230 when both sensors are triggered, thereby preventing accidental triggering.

In an optional embodiment of the disclosure, the pressure sensor component includes a pressure-sensitive sensor and a spring-loaded plate (or an elastic sheet). The pressure-sensitive sensor is disposed on the spring-loaded plate. One end of the spring-loaded plate is fixed to a bracket, and the other end of the spring-loaded plate abuts against a first surface of the capacitive component. A second surface of the capacitive component adheres to a transparent cover plate.

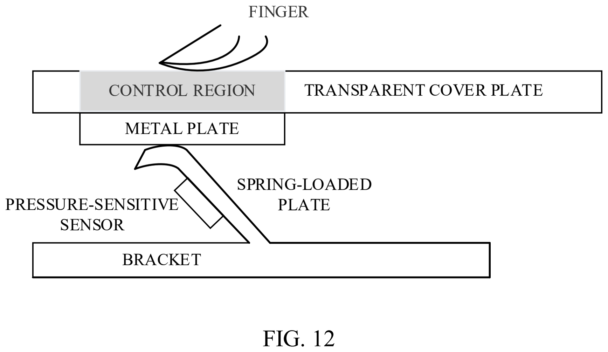

Specifically, as illustrated in FIG. 12, the pressure-sensitive sensor is attached to a spring-loaded plate, forming the pressure sensor component. The pressure sensor component is supported by a bracket onto a metal plate (the capacitive component), and the metal plate is located under the transparent cover plate. When the control region 230 is pressed by the finger of the user, a capacitive signal is generated through the metal plate, and the spring-loaded plate deforms to transmit pressure to the pressure-sensitive sensor, such that the pressure-sensitive sensor outputs a pressure signal.

In an optional embodiment of the disclosure, the pressure sensor component is implemented as at least two pressure sensor components, and a switching direction of the first display content displayed on the second display component is determined in response to an order in which the at least two pressure sensor components are triggered.

Exemplarily, in embodiments of the disclosure, the control region 230 integrates at least two pressure sensor components. When sliding is performed, with the finger of the user, on the control region 230, the first mobile terminal 200 determines the switching direction of the first display content displayed on the second display component 220 in response to the order in which the at least two pressure sensor components are triggered. For example, if the at least two pressure sensor components are triggered from left to right, the switching direction of the first display content displayed on the second display component 220 is determined to be from left to right. If the at least two pressure sensor components are triggered from right to left, the switching direction of the first display content displayed on the second display component 220 is determined to be from right to left.

In an optional embodiment of the disclosure, the body includes a frame, and the control region 230 is disposed near the frame in the middle of the second surface of the body.

Exemplarily, in embodiments of the disclosure, when the control region 230 is disposed on the second surface of the body of the first mobile terminal 200, the control region 230 may be disposed at a position in the middle close to the frame of the second surface. In this case, the control region 230 may be disposed at a position in the middle close to the left frame of the second surface or at a position in the middle close to the right frame of the second surface. Embodiments of the disclosure do not specifically limit the position where the control region 230 is disposed on the second surface.

FIG. 3 illustrates a schematic diagram of the control region 230 disposed on the second surface of the body of the first mobile terminal 200. As illustrated in FIG. 3, the control region 230 is disposed at the position in the middle close to the right frame of the second surface.

In an optional embodiment of the disclosure, a gap(s) is defined between the light-emitting units arranged in the array, a photovoltaic component is disposed in the gap(s), and the photovoltaic component is configured to power the second display component 220.

In an optional embodiment of the disclosure, the photovoltaic component is disposed in the gap defined between the light-emitting units arranged in the array. The photovoltaic component may be disposed in the gap(s) or part of the gap(s). The arrangement of the photovoltaic component is not specifically limited in embodiments of the disclosure.

As a specific example, as illustrated in FIG. 4A again, the gray region in FIG. 4A is the gap(s) defined between the light-emitting units (black circles), and the photovoltaic component can be disposed in the gray region to power the second display component 220. Specifically, the photovoltaic component may be disposed in all gray region or part of the gray region.

In embodiments of the disclosure, the photovoltaic component may power at least one of the second display component 220 and the control chip. Certainly, the photovoltaic component may also power the sensor component, the prompt component, etc.

In embodiments of the disclosure, the photovoltaic component is disposed in the gap(s) between light-emitting units to power the second display component 220, the control chip, the sensor component, the prompt component, etc., such that power consumption of the first mobile terminal 200 can be reduced, and content can also be displayed on the second display component 220 when the first mobile terminal 200 is in a powered-off state.

Although multiple embodiments of the disclosure are illustrated and described herein, it is apparent to those skilled in the art that such embodiments are provided by way of example only. Those skilled in the art may conceive of many changes, modifications, and substitutions without departing from the concept and spirit of the disclosure. It may be understood that in the practice of the disclosure, various alternatives to the embodiments of the disclosure described herein may be adopted. The appended claims are intended to define the protection scope of the disclosure, and therefore cover the equivalents or alternatives within the scope of these claims.

## Claims

1. A method, wherein the method is applicable to a first mobile terminal and the first mobile terminal comprises a control region, a body, a first display component disposed on a first surface of the body, and a second display component disposed on a second surface of the body, wherein the second display component is formed by a plurality of light-emitting units arranged in an array; the method comprising:
receiving an input signal from the control region, wherein the input signal is obtained via the control region in response to an external operation; and
determining display parameters for the plurality of light-emitting units on the second display component based on the input signal; and
displaying first display content on the second display component.

2. The method of claim 1, wherein the first mobile terminal further comprises a sensor component and the method further comprises:
switching the first display content displayed on the second display component in response to a trigger signal from the sensor component.

3. The method of claim 1 or claim 2, wherein the first display content is a target image, and before displaying the first display content on the second display component, the method further comprises:
performing array segmentation on the target image, wherein each light-emitting unit is mapped to at least one segmented region of the target image;
determining a display parameter for the respective light-emitting unit mapped to each segmented region, to obtain a dot-matrix form of the target image; and
controlling the second display component to display the dot-matrix form of the target image.

4. The method of claim 1 or claim 2, wherein the first mobile terminal further comprises a camera module, and the method further comprises:
controlling the camera module to capture a first preview image, and processing the captured first preview image into a second preview image, wherein the second preview image is a dot-matrix form of the first preview image; and
controlling the second display component to display the second preview image.

5. The method of claim 1, further comprising:
detecting a display component facing a face;
performing content display on the first display component in response to a detection that the display component facing the face is the first display component;
performing content display on the second display component in response to a detection that the display component facing the face is the second display component;
switching second display content displayed on the first display component to display on the second display component in response to a detection that the display component facing the face is switched from the first display component to the second display component; and
switching the first display content displayed on the second display component to display on the first display component in response to a detection that the display component facing the face is switched from the second display component to the first display component.

6. The method of any preceding claim, wherein:
the first display component is provided with a widget, and third display content displayed on the widget is associated with the first display content displayed on the second display component; and
the second display component is disposed in a first region of the second surface of the body, and the widget is disposed on the first display component at a position corresponding to the first region; and
the third display content is a first animation effect, the first display content is a second animation effect, and the first animation effect and the second animation effect are associated with each other in timing.

7. The method of any of claims 1 to 5, wherein
the first display component is provided with a widget, and third display content displayed on the widget is associated with the first display content displayed on the second display component; and
the first display component is further provided with a display entry corresponding to the second display component, and the method further comprises:
controlling the second display component to display the third display content in response to an operation instruction associating the widget with the display entry.

8. The method of claim 2, wherein
the sensor component is a pressure sensor component, and the pressure sensor component is disposed on the second surface of the body, wherein switching the first display content displayed on the second display component in response to the trigger signal from the sensor component comprises:
receiving a pressure-sensing signal from the pressure sensor component, and switching the first display content displayed on the second display component according to the pressure-sensing signal; or
the sensor component is a gyro-sensor, and the gyro-sensor is disposed inside the body, wherein the method further comprises: receiving a first activation signal from the control region, and activating the gyro-sensor according to the first activation signal; and switching the first display content displayed on the second display component in response to the trigger signal from the sensor component comprises:
receiving a rotation signal from the gyro-sensor, and switching the first display content displayed on the second display component according to the rotation signal, wherein the rotation signal is obtained via the gyro-sensor by sensing a rotational motion of the first mobile terminal; or
the sensor component is a touch sensor component, and the touch sensor component is disposed on the second surface of the body, wherein switching the first display content displayed on the second display component in response to the trigger signal from the sensor component comprises:
receiving a touch signal from the touch sensor component, and switching the first display content displayed on the second display component according to the touch signal.

9. The method of any preceding claim, wherein the first mobile terminal is connected to a second mobile terminal, and the method further comprises:
obtaining operational information of the second mobile terminal, wherein the operational information comprises at least one of: an operational state of the second mobile terminal, operational content displayed on the second mobile terminal, or an operational interface of the second mobile terminal; and
controlling the second display component to at least partially display the operational information of the second mobile terminal.

10. The method of any preceding claim, wherein the first mobile terminal further comprises a prompt component and the method further comprises:
receiving a second activation signal from the control region, and activating the prompt component according to the second activation signal; and
controlling the prompt component to perform information prompt.

11. A mobile terminal, wherein the mobile terminal is the first mobile terminal, and the first mobile terminal comprises a control region, a body, a first display component disposed on the body, and a second display component disposed on the body, wherein:
the first display component is disposed on a first surface of the body, and the second display component is disposed on a second surface of the body;
the second display component is formed by a plurality of light-emitting units arranged in an array, and the second display component is controlled for content display by controlling at least one display parameter for the plurality of light-emitting units; and
the control region is disposed on a second surface of the body, and the control region is configured to receive an external input signal, to display first display content on the second display component.

12. The mobile terminal of claim 11, wherein the first mobile terminal further comprises a transparent cover plate configured to cover the second surface of the body, and the second display component is located under the transparent cover plate.

13. The mobile terminal of claim 11 or claim 12, wherein the control region integrates a capacitive component and a pressure sensor component, and the control region is configured to determine that the external input signal is received when both the capacitive component and the pressure sensor component are triggered.

14. The mobile terminal of claim 13, wherein the pressure sensor component comprises at least two pressure sensor components, and a switching direction of the first display content displayed on the second display component is determined in response to an order in which the at least two pressure sensor components are triggered.

15. The mobile terminal of claim 13, wherein the pressure sensor component comprises a pressure-sensitive sensor and a spring-loaded plate, wherein the pressure-sensitive sensor is disposed on the spring-loaded plate, one end of the spring-loaded plate is fixed to a bracket, the other end of the spring-loaded plate abuts against a first surface of the capacitive component, and a second surface of the capacitive component adheres to a transparent cover plate.
